# FASCICULE DE BREVET EUROPEEN

(11) **EP 1 234 756 B1**
(45) Date de publication et mention de la délivrance du brevet: **02.11.2005**
(21) Numéro de dépôt: 02290304.1
(22) Date de dépôt: 07.02.2002
(51) Int. Cl.: B62D 47/00, B60R 5/04, B60P 3/42

(54) **Véhicule automobile de type break transformable**
Kraftfahrzeug vom Kombi-umwandelbarem Typ
Motor vehicle of estate car transformable type

(30) Priorité: 26.02.2001 FR 0102600
(43) Date de publication de la demande: 28.08.2002
(73) Titulaire: Peugeot Citroen Automobiles SA, 92200 Neuilly sur Seine (FR)
(72) Inventeur: Bertrand-Belanger, Pascal, 92310 Sevres (FR)
(74) Mandataire: Lanceplaine, Jean-Claude

(56) Documents cités:
- FR-A- 2 745 766
- US-A- 3 419 304
- US-A- 4 261 613

## Description

La présente invention concerne un véhicule automobile de type break, transformable en un véhicule à benne ouverte vers le haut, appelé pick-up.

Les véhicules automobiles de type break comportent un habitacle ayant une partie avant contenant le poste de conduite du véhicule et au moins un siège avant et une partie arrière contenant au moins une rangée de sièges arrière escamotables de manière à constituer une partie d'un plancher plat s'étendant sur toute la partie arrière de l'habitacle du véhicule dans la position rabattue de ladite rangée de sièges arrière.

L'habitacle comporte, à son extrémité arrière, un ouvrant appelé hayon qui est généralement articulé à sa partie supérieure autour d'un axe transversal de telle manière que ce hayon puisse être déplacé entre une position abaissée de fermeture et une position relevée d'ouverture donnant accès, par l'arrière du véhicule, à la partie arrière de l'habitacle.

Ainsi, après avoir rabattu la rangée de sièges arrière, l'utilisateur dispose d'un volume de transport correspondant à l'ensemble de la partie arrière de l'habitacle accessible par l'ouverture dégagée lors du basculement vers le haut du hayon.

Les véhicules automobiles de type break permettent donc de transporter des charges volumineuses qui sont introduites dans le véhicule par l'ouverture arrière.

Toutefois, l'habitacle de ces véhicules est fermé par un toit, de sorte que l'espace de rangement et de transport à l'intérieur du véhicule est limité vers le haut.

De plus, ce type de véhicules automobiles comporte généralement deux parois délimitant latéralement la partie arrière de l'habitacle et qui comprennent des portes latérales arrière équipées de vitre dans leur partie supérieure et deux parties de carrosserie fixes ou custodes généralement équipées de vitre dans leur partie supérieure.

Les vitres des parties supérieures des parties latérales du véhicule, lorsque celui-ci est utilisé pour le transport d'objets volumineux, risquent d'être cassées, lors du chargement ou pendant le transport d'objets encombrants.

On connaît par ailleurs, des véhicules automobiles à benne ouverte vers le haut appelés pick-up qui comportent, à l'arrière d'une cabine constituée par la partie antérieure de l'habitacle du véhicule renfermant le poste de conduite, la benne ouverte vers le haut de forme générale parallélépipédique.

La benne ouverte de ce type de véhicules comporte un plancher, deux parois latérales dans la direction longitudinale du véhicule et une paroi d'extrémité arrière ouvrante située à l'opposé de la cabine.

De tels véhicules présentent des avantages en ce qui concerne leur capacité de chargement par rapport à un véhicule classique ou même par rapport à un véhicule de type break, puisque le niveau de chargement de la benne est pratiquement illimité du fait de l'absence d'un toit recouvrant la benne.

Toutefois, les véhicules de type pick-up ne peuvent être utilisés qu'à des fins utilitaires et seulement par le conducteur et éventuellement un passager, ce qui limite leur intérêt dans le cas de leur utilisation par des particuliers.

En outre, ces véhicules sont difficilement utilisables sur de long parcours routier ou autoroutier.

On connaît dans le document US-A-3 419 304 un véhicule automobile de type break transformable en un véhicule à benne ouverte vers le haut. Le véhicule comporte un pavillon formé par un panneau métallique flexible déplaçable par coulissement et enroulable à l'avant du véhicule. Le véhicule comporte également une partie arrière formée par un panneau inférieur basculable et par un panneau supérieur déplaçable par coulissement sur la caisse du véhicule pour le transformer en deux configurations à benne ouverte vers le haut. Ce document comprend: toutes les particularités invoquées dans le préambule de la revendication 1.

On connaît aussi dans le document DE-A-196 16 118 un véhicule automobile de type break transformable en un véhicule à benne ouverte vers le haut dont la partie supérieure du hayon forme une vitre arrière escamotable de manière coulissante à l'intérieur d'une partie inférieure dudit hayon.

L'invention a pour but de proposer un véhicule automobile utilisable aussi bien pour le transport de charges que pour le transport de passagers et qui est facilement transformable par des moyens simples et économiques afin de cumuler les avantages des véhicules automobiles de type break et de type pick-up.

L'invention a donc pour objet un véhicule automobile de type break transformable en un véhicule à benne ouverte vers le haut, appelé pick-up, et comportant un habitacle contenant un poste de conduite, au moins un siège avant, une rangée de sièges arrière comprenant au moins une assise et au moins un dossier déplaçables entre une position d'utilisation et une position escamotée, et délimité par un plancher, deux parois latérales comportant chacune une vitre arrière et une vitre de custode escamotables, un pavillon couvrant l'ensemble de l'habitacle et, à sa partie postérieure, par un hayon pivotant, et comportant une partie supérieure formant une vitre arrière escamotable de manière coulissante à l'intérieur d'une partie inférieure dudit hayon, caractérisé en ce que le pavillon comporte, successivement dans une direction longitudinale du véhicule et de l'avant vers l'arrière, une partie fixe et une partie mobile formée d'un panneau central et d'un panneau arrière, lesdits panneaux étant déplaçables chacun par basculement dans l'habitacle entre une position sensiblement horizontale prolongeant ladite partie fixe dans la configuration break du véhicule et une position escamotée respectivement dans deux configurations à benne ouverte vers le haut dudit véhicule.

Selon d'autres modes particuliers de réalisation de l'invention :
- le panneau arrière mobile est monté articulé par son bord antérieur sur le bord postérieur du panneau central mobile au moyen d'un axe d'articulation transversal par rapport à l'axe longitudinal du véhicule,
- le panneau arrière mobile est, dans la première configuration à benne ouverte du véhicule, placé sensiblement dans le prolongement du dossier de la rangée de sièges arrière en position d'utilisation, le panneau central mobile étant dans la position prolongeant la partie fixe du pavillon,
- le véhicule comporte des moyens d'obturation de l'espace latéral entre le panneau arrière mobile en position escamotée, le dossier de la rangée de sièges arrière et la face interne de chaque paroi latérale,
- les moyens d'obturation comprennent, pour chaque espace latéral, une vitre d'appoint présentant un contour de forme complémentaire audit espace et déplaçable entre une position escamotée dans le dossier de la rangée de sièges arrière et une position déployée fermant ledit espace latéral,
- le panneau central mobile est monté articulé par son bord antérieur sur le bord postérieur de la partie fixe du pavillon au moyen d'un axe d'articulation transversal par rapport à l'axe longitudinal du véhicule,
- le panneau central mobile est dans la seconde configuration à benne ouverte du véhicule, placé derrière le dossier dudit siège avant et s'étend entre la partie fixe du pavillon et le plancher, le panneau arrière mobile étant rabattu contre la face interne du panneau central mobile,
- le véhicule comporte des moyens de séparation étanche de la partie de l'habitacle située devant le panneau central mobile par rapport à la partie de l'habitacle située derrière ledit panneau dans la seconde configuration à benne ouverte du véhicule,
- les moyens de séparation sont formés par un cadre rigide placé entre le panneau central mobile, le plancher et la portion adjacente de la face interne de chaque paroi latérale du véhicule,
- les moyens de séparation sont formés par des éléments souples placés entre le panneau central mobile et la face interne de chaque paroi latérale du véhicule.

D'autres caractéristiques et avantages de l'invention apparaîtront au cours de la description qui va suivre, donnée à titre d'exemple et faite en se référant aux dessins annexés, sur lesquels :
- la Fig. 1 est une vue en perspective, de trois quarts arrière, d'un véhicule automobile dans sa configuration break,
- la Fig. 2 est une vue schématique en coupe longitudinale du véhicule automobile dans la configuration de la Fig. 1,
- la Fig. 3 est une vue en perspective, de trois quarts arrière, du véhicule automobile dans sa première configuration à benne ouverte,
- la Fig. 4 est une vue schématique en coupe longitudinale du véhicule automobile dans la configuration de la Fig. 3,
- la Fig. 5 est une vue schématique en coupe transversale selon la ligne 5-5 de la Fig. 4,
- la Fig. 6 est une vue en perspective, de trois quarts arrière, du véhicule automobile dans sa seconde configuration à benne ouverte,
- la Fig. 7 est une vue schématique en coupe longitudinale du véhicule automobile dans la configuration de la Fig. 6,
- la Fig. 8 est une vue schématique en coupe transversale selon la ligne 8-8 de la Fig. 7.

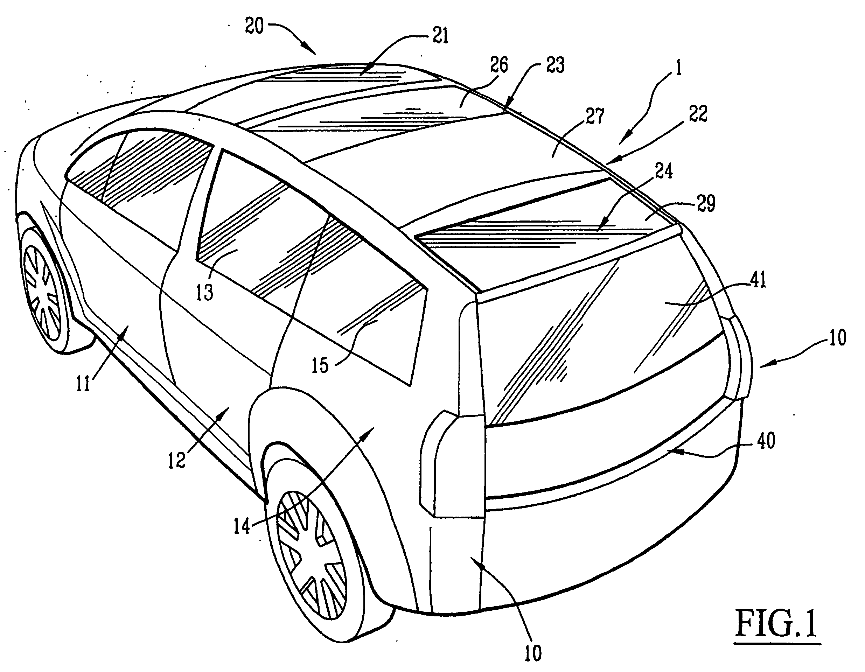

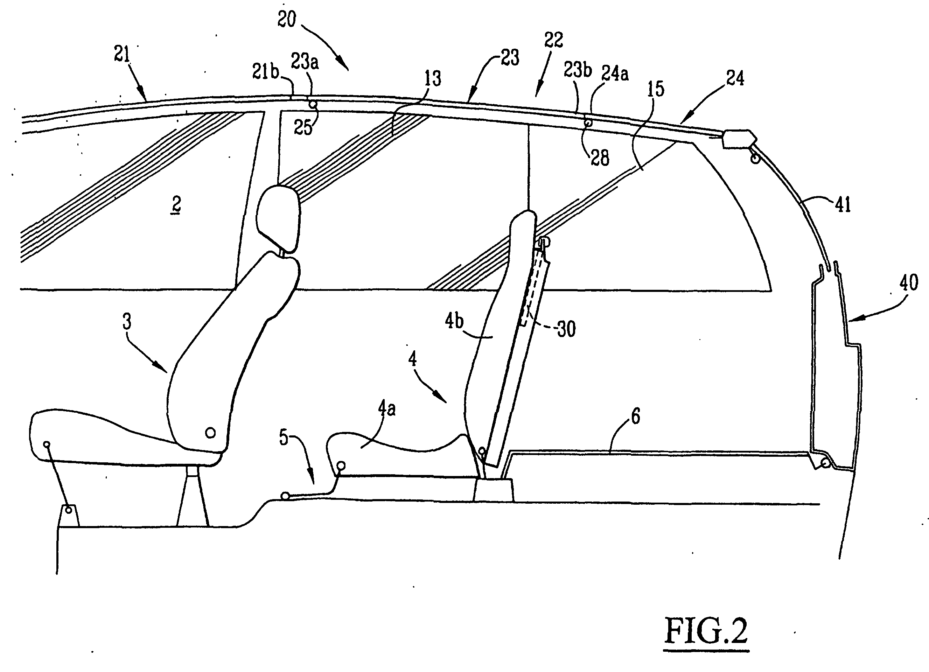

Sur les Figs. 1 et 2, on a représenté schématiquement un véhicule automobile selon l'invention, de type break, désigné de manière générale par la référence 1.

Le véhicule automobile 1 comporte une carrosserie délimitant un habitacle 2 contenant un poste de conduite, au moins un siège avant 3 et une rangée de sièges arrière 4 constituée, dans l'exemple de réalisation représenté sur les figures, par une banquette comprenant une assise 4a et un dossier 4b.

La rangée de sièges arrière 4 peut également être constituée par deux ou trois sièges indépendants.

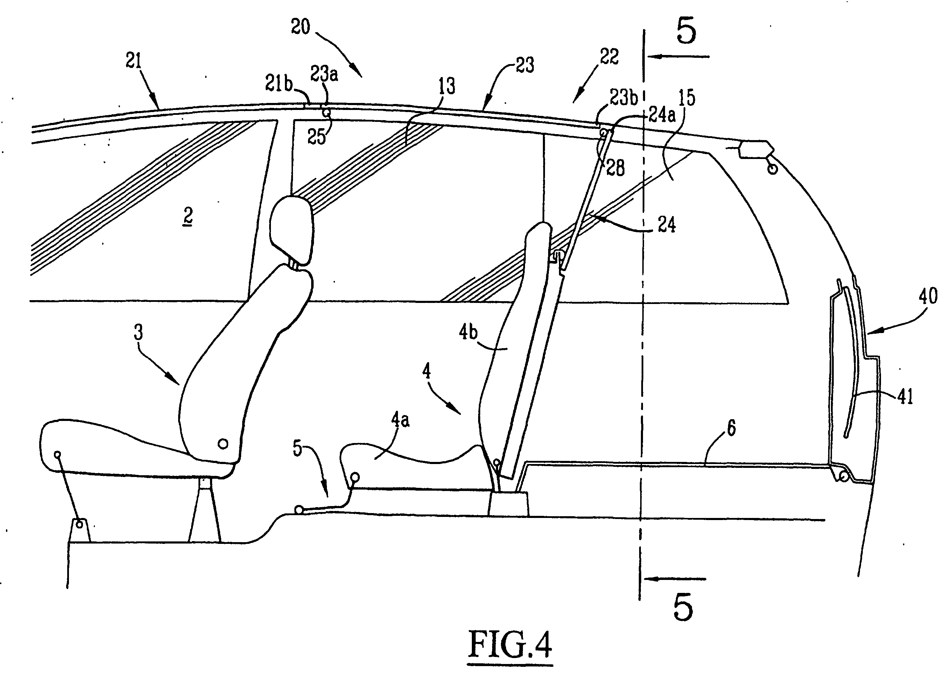

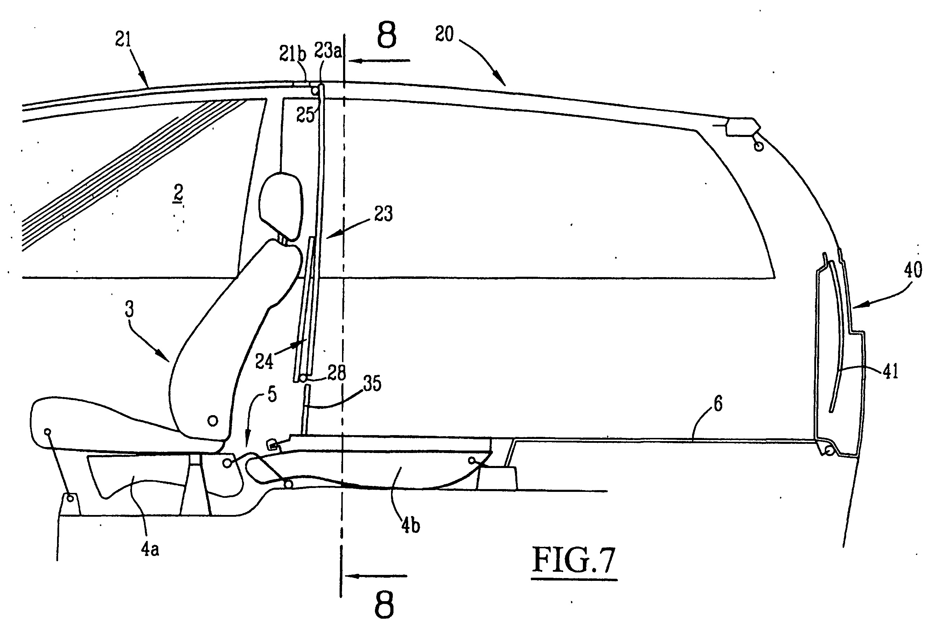

De manière classique, l'assise 4a et le dossier 4b de la rangée de sièges arrière 4 sont déplaçables entre une position d'utilisation représentée sur les Figs. 2 et 4 et une position escamotée représentée sur la Fig. 7 dans laquelle l'assise 4a est basculée au moyen d'un système de bielles 5 au-dessous de l'assise du siège avant 3 et le dossier 4b est basculé vers l'avant du véhicule de façon à constituer une partie de la surface du plancher plat de l'habitacle 2, notamment pour le transport d'objets volumineux.

Pour cela, le siège 3 peut également être basculé vers l'avant du véhicule automobile pour permettre le positionnement de l'assise 4a au-dessous dudit siège avant 3.

Selon une variante, l'assise 4a de la rangée de sièges arrière 4 peut être retirée du véhicule 1 pour placer le dossier 4b dans la position escamotée.

L'habitacle 2 est délimitée par un plancher 6, deux parois latérales 10, un pavillon 20 couvrant l'ensemble de l'habitacle 2 et, à sa partie postérieure, par un hayon 40.

Chaque paroi latérale 10 est formée, de l'avant jusqu'à l'arrière du véhicule automobile 1, par une porte avant 11, une porte arrière 12 munie d'une vitre 13 coulissante et une custode 14 comportant, dans sa partie supérieure, une vitre de custode 15 également coulissante.

Dans l'exemple de réalisation représenté sur les figures, la porte arrière 12 est dépourvue d'encadrement et l'étanchéité entre la vitre 13 de cette porte arrière 12 et la vitre de custode 15 est assurée par un joint d'étanchéité, non représenté, solidaire de ladite vitre de custode 15.

Le pavillon 20 comporte successivement dans une direction longitudinale du véhicule 1 et de l'avant vers l'arrière, une partie fixe 21 et une partie mobile 22 formées d'un panneau central 23 et d'un panneau arrière 24.

Le panneau central 23 mobile comporte, dans une direction longitudinale du véhicule et de l'avant vers l'arrière, une première partie 26 formée par une vitre et une seconde partie 27 opaque.

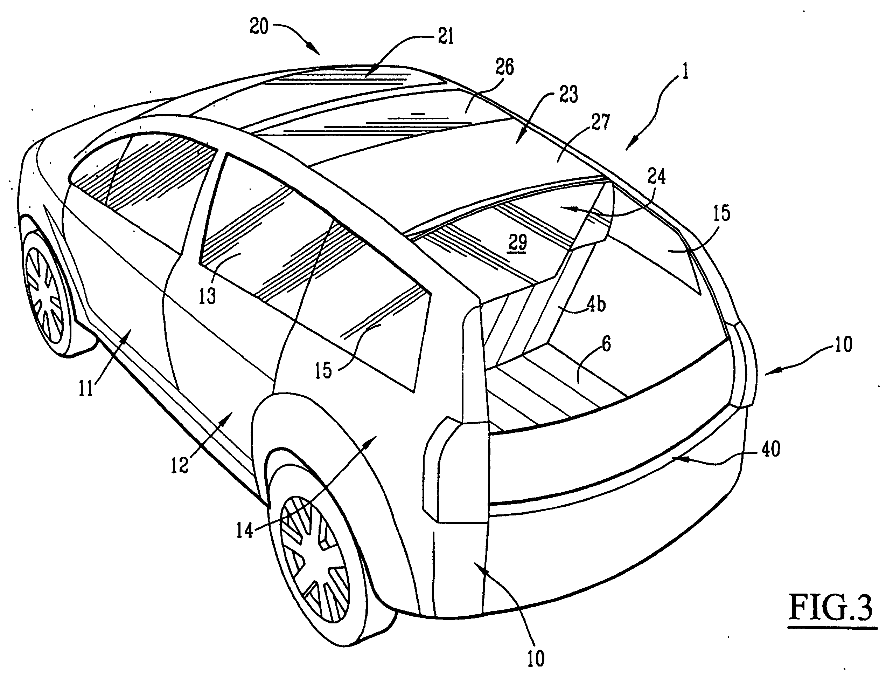

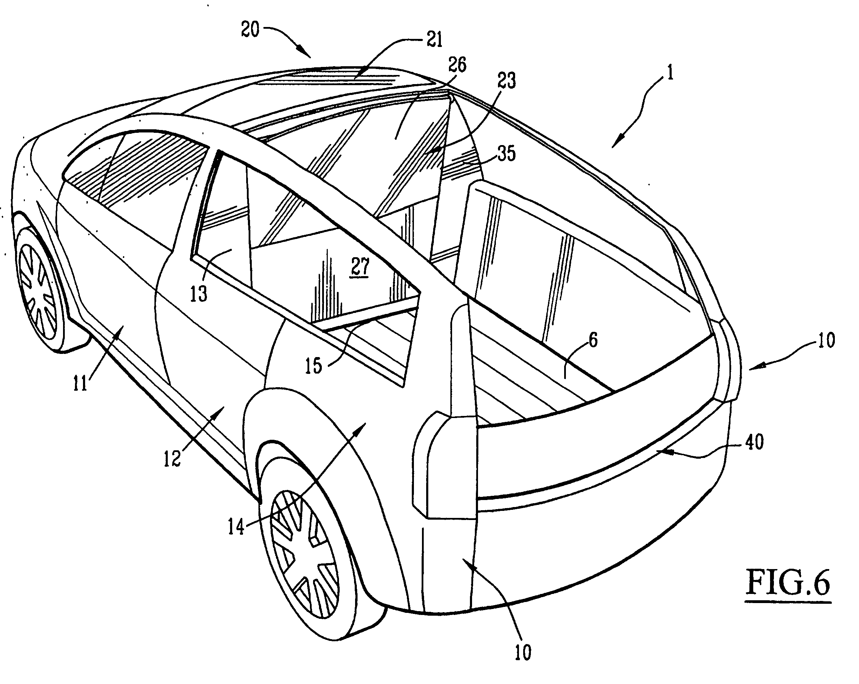

Comme on le verra ultérieurement, les panneaux 23 et 24 sont déplaçables chacun par basculement dans l'habitacle 2 entre une position sensiblement horizontale prolongeant la partie fixe 21 dans la configuration break du véhicule représentée sur les Figs. 1 et 2, et une position escamotée respectivement dans une première configuration à benne ouverte du véhicule 1 représentée sur les Figs. 3 et 4 et une seconde configuration à benne ouverte dudit véhicule 1 représentée sur les Figs. 6 et 7.

Le hayon 40 disposé à l'arrière du véhicule automobile 1, de façon à constituer une cinquième porte, est monté pivotant par exemple à sa partie inférieure sur la carrosserie autour d'un axe d'articulation horizontal, non représenté, s'étendant transversalement par rapport à la direction longitudinale dudit véhicule.

Dans ce cas, le hayon 40 est déplaçable par pivotement entre une position sensiblement verticale d'obturation de la partie arrière de l'habitacle 2 et une position sensiblement horizontale dans le prolongement du plancher 6 de façon à augmenter la surface de chargement de ce plancher.

De plus, le hayon 40 comporte, dans sa partie supérieure, une vitre 41 constituant la lunette arrière du véhicule automobile dans la configuration de type break. Cette vitre 41 est escamotable de manière coulissante à l'intérieur de la partie inférieure du hayon 40. Cette vitre 41 peut également être montée dans un cadre.

Selon une variante, le hayon 40 peut être articulé selon un axe d'articulation vertical sur l'une des parois latérales 10.

Le panneau central mobile 23 est monté articulé par son bord antérieur 23a sur le bord postérieur 21b de la partie fixe 21 du pavillon 20 au moyen d'un axe d'articulation 25 transversal par rapport à l'axe longitudinal du véhicule 1 et constitué par exemple par au moins une charnière.

Ainsi que représenté, notamment à la Fig. 2, l'axe d'articulation 25 est situé sensiblement au-dessus du dossier du siège avant 3.

Le panneau arrière mobile 24 est monté articulé par son bord antérieur 24a sur le bord postérieur 23b du panneau central mobile 23 au moyen d'un axe d'articulation 28 transversal par rapport à l'axe longitudinal du véhicule 1 et constitué par exemple par au moins une charnière.

Ainsi que représenté notamment à la Fig. 2, l'axe d'articulation 28 situé sensiblement au-dessus du dossier 4b de la rangée de sièges arrière 4 en position d'utilisation.

Le panneau arrière mobile 24 comporte un cadre muni d'une vitre 29 destinée à former une lunette arrière dans la première configuration à benne ouverte du véhicule.

Des éléments d'étanchéité, non représentés, assurent l'étanchéité entre la partie fixe 21 du pavillon 20 et les panneaux 23 et 24 et également entre le panneau arrière 24 et la vitre 41 du hayon 40 dans sa position déployée.

Dans la configuration break du véhicule automobile 1, comme représenté sur les Figs. 1 et 2, la rangée de sièges arrière 4 est en position d'utilisation et les panneaux mobiles, respectivement 23 et 24, sont dans la position prolongeant la partie fixe 21 dudit pavillon 20 de façon à couvrir l'ensemble de l'habitacle 2.

De plus, dans cette configuration, les vitres de custode 15 sont en position fermée et la vitre 41 du hayon 40 est déployée de façon à constituer la lunette arrière du véhicule automobile.

Les panneaux mobiles, respectivement 23 et 24, sont maintenus dans cette position par exemple par des organes de verrouillage, non représentés.

Par ailleurs, dans cette configuration break du véhicule automobile, la rangée de sièges arrière 4 peut aussi être placée en position escamotée de façon à augmenter la surface de chargement du plancher 6.

Pour passer de la configuration break à la première configuration à benne ouverte vers le haut et présentant quatre ou cinq places fermées, l'utilisateur escamote la vitre 41 dans la partie inférieure du hayon 40 et déverrouille de l'intérieur le panneau arrière 24 du pavillon 20.

Ce panneau arrière 24 bascule vers l'intérieur de l'habitacle 2 autour de l'axe d'articulation 28 et l'utilisateur le positionne sensiblement dans le prolongement du dossier 4b de la rangée de sièges arrière 4 où il est maintenu verrouillé par un organe de blocage, (Figs. 3 et 4), constitué par exemple par une gâche, non représentée. Le panneau arrière 24 forme donc une lunette arrière.

Etant donné que la largeur du panneau arrière 24 est inférieure à la largeur de l'habitacle 2 au niveau du bord supérieur du dossier 4b de la rangée de sièges arrière 4, ce panneau arrière 24 ne ferme qu'une partie de l'habitacle 2 et il demeure de chaque côté dudit panneau arrière 24 un espace latéral ouvert.

A cet effet, le véhicule comporte des moyens d'obturation de chaque espace latéral entre le panneau arrière 24 mobile en position escamotée, le dossier 4b de la rangée de sièges arrière 4 et la portion adjacente de la face interne de chaque paroi latérale 10.

Ainsi que représenté sur les Figs. 3 et 4, ces moyens d'obturation comprennent, pour chaque espace latéral, une vitre d'appoint 30 présentant un contour de forme complémentaire audit espace et déplaçable entre une position escamotée dans le dossier 4b de la rangée de sièges arrière 4 et une position déployée fermant ledit espace latéral.

Ainsi, la fermeture et l'isolation de la partie de l'habitacle 2 située devant la rangée de sièges arrière 4 par rapport à la partie dudit habitacle 2 située derrière le dossier 4b de la rangée de sièges arrière 4 et qui elle est ouverte, est assurée par ce dossier 4b, les vitres d'appoint 30 et le panneau arrière 24.

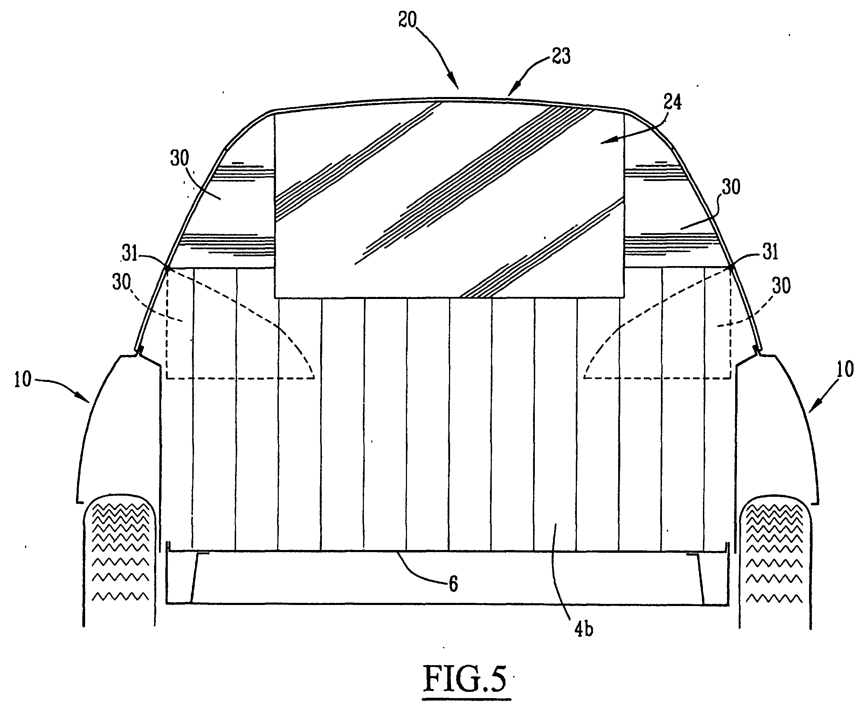

Chaque vitre d'appoint 30 est déplaçable par pivotement autour d'un axe d'articulation 31 (Fig. 5), soit manuellement, soit par l'intermédiaire d'un système motorisé approprié et chaque vitre d'appoint 30 est maintenue en position de fermeture de l'espace latéral correspondant par des moyens appropriés, comme par exemple une gâche.

Enfin, ces vitres d'appoint 30 et le panneau arrière 24 mobile comportent des organes d'étanchéité avec les éléments adjacents de la carrosserie du véhicule automobile afin d'isoler la partie de l'habitacle située devant la rangée de sièges arrière 4 de la partie de l'habitacle située derrière ladite rangée de sièges arrière 4.

Pour transformer le véhicule automobile de sa configuration à benne ouverte vers le haut à quatre places dans sa configuration à benne ouverte vers le haut à deux places, comme représentée sur les Figs. 6 à 8, l'utilisateur libère le panneau arrière 24 qui se place par gravité dans une position sensiblement verticale.

L'utilisateur rabat les deux vitres d'appoint 30 à l'intérieur du dossier 4b de la rangée de sièges arrière 4 et déclenche les mécanismes de descente, d'une part, des vitres arrière 13 et, d'autre part, des vitres de custode 15 qui s'escamotent vers les panneaux respectifs de la carrosserie du véhicule automobile 1.

L'utilisateur rabat le dossier 4b de la rangée de sièges arrière 4 vers l'arrière de l'habitacle 2 afin de dégager le passage pour le panneau arrière 24 qui est placé au-dessous du panneau central 23 par rotation de 180° par rapport à sa position initiale.

Ce panneau arrière 24 est verrouillé contre le panneau central 23 par des moyens appropriés, comme par exemple une gâche solidaire dudit panneau central 23.

L'utilisateur déplace l'assise 4a de la rangée de sièges arrière 4 afin de l'escamoter au-dessous du siège avant 3 et il libère le panneau central 23 supportant le panneau arrière 24 et cet ensemble effectue une rotation d'environ 90° autour de l'axe d'articulation 25.

Le panneau central 23 est verrouillé en position basse par des moyens appropriés, non représentés, et l'utilisateur rabat le dossier 4b de la rangée de sièges arrière 4 vers l'avant de l'habitacle afin d'aménager un plancher 6 plat, ainsi que représenté sur les Figs. 6 et 7.

Etant donné que la largeur du panneau central 23 est inférieure à la largeur de l'habitacle au niveau du dossier du siège avant 3 et également au niveau du plancher 6, le véhicule automobile est équipé de moyens de séparation étanche de la partie de l'habitacle située devant le panneau central 23 par rapport à la partie de l'habitacle située derrière ledit panneau 23 dans cette seconde configuration à benne ouverture du véhicule.

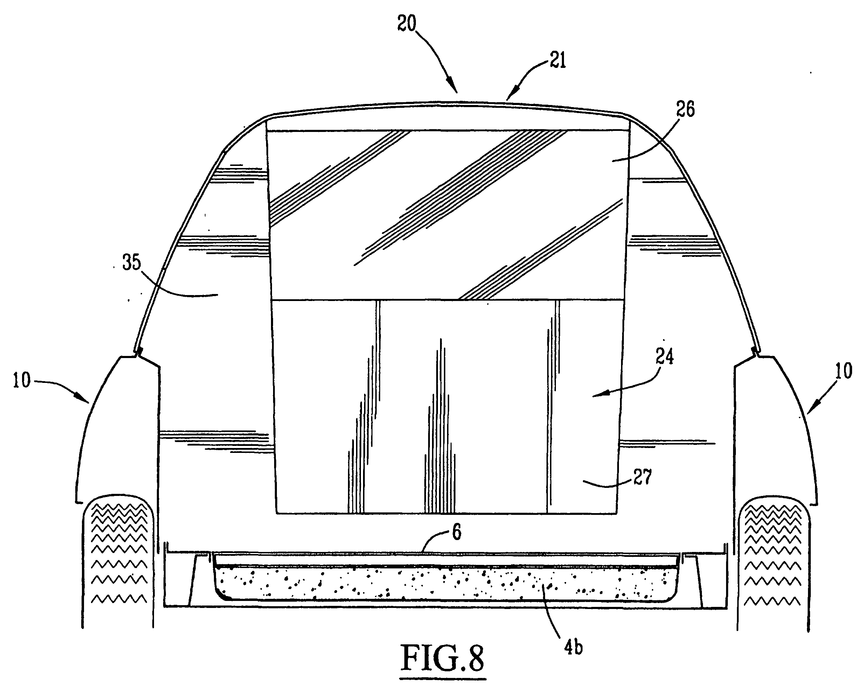

Comme représenté sur les Figs. 6 et 8, ces moyens de séparation sont constitués par un cadre 35 rigide placé entre le panneau central 23, le plancher 6 et la face interne de chaque paroi latérale 10 du véhicule automobile 1.

Ce cadre rigide forme un arceau de rigidification pour le véhicule automobile 1 et il peut renfermer des coffres de rangement supplémentaires. Ce cadre 5 comporte des organes d'étanchéité avec les éléments adjacents de la carrosserie du véhicule automobile et avec le panneau central 23 du pavillon 20.

Dans cette seconde configuration à benne ouverte du véhicule automobile, la vitre 26 du panneau central 23 forme une lunette arrière.

De plus, dans cette seconde configuration à benne ouverte vers le haut, la rangée de sièges arrière 4 peut être replacée en position d'utilisation de façon à offrir deux places arrière ouvertes pour rouler par jour de beau temps.

Selon une variante, les moyens de séparation de l'habitacle dans la seconde configuration à benne ouverte, peuvent également être constitués par des éléments souples placés entre le panneau central 23 et la face interne de chaque paroi latérale 10 du véhicule automobile 1.

Le véhicule automobile selon l'invention présente une modularité absolue et une simplicité de mise en oeuvre contrairement à beaucoup de systèmes de modularité utilisés jusqu'à présent et qui comportent des bielles, des rails et des éléments coulissants qui sont onéreux et fragiles. Le chargement dans la configuration à benne ouverte est facilité par la présence des portes arrière ce qui n'est pas le cas dans ce type de véhicule utilisé jusqu'à présent.

Le véhicule automobile selon l'invention permet de passer facilement d'une configuration break à une configuration de type pick-up de telle sorte que ce véhicule puisse servir aussi bien pour le transport de passagers ou de charges dans un habitacle entièrement fermé, que pour le transport de charges dans une benne ouverte vers le haut et facilement accessible.

Le véhicule selon l'invention est particulièrement économique du fait de sa polyvalence et peut éviter l'achat d'un second véhicule, par un utilisateur désirant effectuer les transports sur route à grande distance, de charges ou de passagers, dans de bonnes conditions de confort et de protection climatique et de transport purement utilitaire de charges volumineuses, dans une utilisation locale.

## Revendications

1. Véhicule automobile de type break transformable en un véhicule à benne ouverte vers le haut, appelé pick-up, et comportant un habitacle (2) contenant un poste de conduite, au moins un siège avant (3), une rangée de sièges arrière (4) comprenant au moins une assise (4a) et au moins un dossier (4b) déplaçables entre une position d'utilisation et une position escamotée, et délimité par un plancher (6), deux parois latérales (10) comportant chacune une vitre arrière (13) et une vitre de custode (15) escamotables, un pavillon (20) couvrant l'ensemble de l'habitacle (2) et, à sa partie postérieure, par un hayon (40) pivotant et comportant une partie supérieure formant une vitre arrière (41) escamotable de manière coulissante à l'intérieur d'une partie inférieure dudit hayon (40), **caractérisé en ce que** le pavillon (20) comporte, successivement dans une direction longitudinale du véhicule et de l'avant vers l'arrière, une partie fixe (21) et une partie mobile (22) formée d'un panneau central (23) et d'un panneau arrière (24), lesdits panneaux (23 ; 24) étant déplaçables chacun par basculement dans l'habitacle (2) entre une position sensiblement horizontale prolongeant ladite partie fixe (21) dans la configuration break du véhicule et une position escamotée respectivement dans deux configurations à benne ouverte vers le haut dudit véhicule.

2. Véhicule automobile selon la revendication 1, **caractérisé en ce que** le panneau arrière (24) mobile est monté articulé par son bord antérieur (24a) sur le bord postérieur (23b) du panneau central (23) mobile au moyen d'un axe d'articulation (28) transversal par rapport à l'axe longitudinal du véhicule.

3. Véhicule automobile selon la revendication 2, **caractérisé en ce que** l'axe d'articulation (28) est situé sensiblement au-dessus du dossier (4b) de la rangée de sièges arrière (4) en position d'utilisation.

4. Véhicule automobile selon l'une quelconque des revendications 1 à 3, **caractérisé en ce que** le panneau arrière (24) mobile est, dans la première configuration à benne ouverte du véhicule, placé sensiblement dans le prolongement du dossier (4b) de la rangée de sièges arrière (4) en position d'utilisation, le panneau central (23) mobile étant dans la position prolongeant la partie fixe (21) du pavillon (20).

5. Véhicule automobile selon l'une quelconque des revendications 1 à 4, **caractérisé en ce que** le panneau arrière (24) mobile comporte un cadre muni d'une vitre (29) formant une lunette arrière dans la première configuration à benne ouverte du véhicule.

6. Véhicule automobile selon l'une quelconque des revendications précédentes, **caractérisé en ce qu'**il comporte des moyens (30) d'obturation de l'espace latéral entre le panneau arrière (24) mobile en position escamotée, le dossier (4b) de la rangée de sièges arrière (4) et la portion adjacente de la face interne de chaque paroi latérale (10).

7. Véhicule automobile selon la revendication 6, **caractérisé en ce que** les moyens d'obturation comprennent, pour chaque espace latéral, une vitre d'appoint (30) présentant un contour de forme complémentaire audit espace et déplaçable entre une position escamotée dans le dossier (4b) de la rangée de sièges arrière (4) et une position déployée fermant ledit espace latéral.

8. Véhicule automobile selon l'une quelconque des revendications précédentes, **caractérisé en ce que** le panneau central (23) mobile est monté articulé par son bord antérieur (23a) sur le bord postérieur (21b) de la partie fixe (21) du pavillon (20) au moyen d'un axe d'articulation (25) transversal par rapport à l'axe longitudinal du véhicule.

9. Véhicule automobile selon la revendication 8, **caractérisé en ce que** l'axe d'articulation (25) est situé sensiblement au-dessus du dossier dudit siège avant (3).

10. Véhicule automobile selon l'une quelconque des revendications précédentes, **caractérisé en ce que** le panneau central (23) mobile est, dans la seconde configuration à benne ouverte du véhicule, placé derrière le dossier dudit siège avant (3) et s'étend entre la partie fixe (21) du pavillon (20) et le plancher (6), le panneau arrière (24) mobile étant rabattu contre la face interne du panneau central (23).

11. Véhicule automobile selon l'une quelconque des revendications précédentes, **caractérisé en ce que** le panneau central (23) mobile comporte, dans une direction longitudinale du véhicule et de l'avant vers l'arrière, une première partie formée par une vitre (26) et une seconde partie (27) opaque, ladite vitre (26) formant une lunette arrière dans la seconde configuration à benne ouverte du véhicule.

12. Véhicule automobile selon l'une quelconque des revendications précédentes, **caractérisé en ce que** qu'il comporte des moyens (35) de séparation étanche de la partie de l'habitacle (2) située devant le panneau central (23) mobile par rapport à la partie de l'habitacle située derrière ledit panneau (23) dans la seconde configuration à benne ouverte du véhicule.

13. Véhicule automobile selon la revendication 12, **caractérisé en ce que** les moyens de séparation sont formés par un cadre (35) rigide placé entre le panneau central (23) mobile, le plancher (6) et la face interne de chaque paroi latérale (10) du véhicule.

14. Véhicule automobile selon la revendication 13, **caractérisé en ce que** le cadre rigide (35) forme un arceau de sécurité dans la seconde configuration à benne ouverte du véhicule.

15. Véhicule automobile selon la revendication 12, **caractérisé en ce** les moyens de séparation sont formés par des éléments souples placés entre le panneau central (23) mobile et la face interne de chaque paroi latérale (10) du véhicule.

## Patentansprüche

1. Kraftfahrzeug vom in ein Fahrzeug mit nach oben offener Ladefläche, Pick-up genannt, umwandelbaren Kombityp und umfassend eine Fahrgastzelle (2), die eine Fahrerstelle, wenigstens einen Vordersitz (3), eine Reihe von Rücksitzen (4) mit wenigstens einer Sitzfläche (4a) und wenigstens einer Lehne (4b), die zwischen einer Verwendungsstellung und einer versenkten Stellung verstellbar sind, umfasst und begrenzt wird durch einen Boden (6), zwei Seitenwände (10), die jede eine versenkbare hintere Scheibe (13) und eine versenkbare hintere Seitenscheibe (15) umfassen, ein Dach (20), welches die Gesamtheit der Fahrgastzelle (2) bedeckt, und, an seinem hinteren Teil, durch eine schwenkbare Rückwand (40), die einen oberen Teil umfasst, der eine gleitend in das Innere eines unteren Teils der Rückwand (40) versenkbare hintere Scheibe (41) bildet, **dadurch gekennzeichnet, dass** das Dach (20) nacheinander in einer Längsrichtung des Fahrzeugs und von vorne nach hinten einen unbeweglichen Teil (21) und einen beweglichen Teil (22) umfasst, der durch eine zentrale Platte (23) und eine hintere Platte (24) gebildet wird, wobei jede der Platten (23; 24) durch Umklappen in die Fahrgastzelle (2) verstellbar ist zwischen einer deutlich horizontalen Stellung, welche den unbeweglichen Teil (21) in der Konfiguration des Fahrzeugs als Kombi verlängert, und einer versenkten Stellung in jeweils zwei Konfigurationen des Fahrzeugs mit nach oben offener Ladefläche.

2. Kraftfahrzeug nach Anspruch 1, **dadurch gekennzeichnet, dass** die hintere bewegliche Platte (24) gelenkig durch ihren vorderen Rand (24a) auf dem hinteren Rand (23b) der zentralen beweglichen Platte (23) mittels einer Gelenksachse (28) transversal zur Längsachse des Fahrzeugs befestigt ist.

3. Kraftfahrzeug nach Anspruch 2, **dadurch gekennzeichnet, dass** die Gelenksachse (28) deutlich oberhalb der Lehne (4b) der Reihe von Rücksitzen (4) in der Verwendungsstellung angeordnet ist.

4. Kraftfahrzeug nach einem der Ansprüche 1 bis 3, **dadurch gekennzeichnet, dass** die hintere bewegliche Platte (24) in der ersten Konfiguration des Fahrzeugs mit offener Ladefläche deutlich in der Verlängerung der Lehne (4b) der Reihe von Rücksitzen (4) in der Verwendungsstellung angeordnet ist, wobei die zentrale bewegliche Platte (23) sich in der Stellung befindet, welche den unbeweglichen Teil (21) des Dachs (20) verlängert.

5. Kraftfahrzeug nach einem der Ansprüche 1 bis 4, **dadurch gekennzeichnet, dass** die hintere bewegliche Platte (24) einen Rahmen umfasst, der mit einer Scheibe (29) versehen ist, die in der ersten Konfiguration des Fahrzeugs mit offener Ladefläche ein Heckfenster bildet.

6. Kraftfahrzeug nach einem der vorhergehenden Ansprüche, **dadurch gekennzeichnet, dass** es Verschlussmittel (30) für den seitlichen Raum zwischen der hinteren beweglichen Platte (24) in der versenkten Stellung, der Lehne (4b) der Reihe von Rücksitzen (4) und dem angrenzenden Abschnitt der Innenfläche jeder Seitenwand (10) umfasst.

7. Kraftfahrzeug nach Anspruch 6, **dadurch gekennzeichnet, dass** die Verschlussmittel für jeden seitlichen Raum eine zusätzliche Scheibe (30) umfassen, welche eine zur Form des Raumes komplementäre Kontur aufweist und zwischen einer in der Lehne (4b) der Reihe von Rücksitzen (4) versenkten Stellung und einer ausgefahrenen Stellung, welche den seitlichen Raum verschließt, verstellbar ist.

8. Kraftfahrzeug nach einem der vorhergehenden Ansprüche, **dadurch gekennzeichnet, dass** die zentrale bewegliche Platte (23) gelenkig durch ihren vorderen Rand (23a) auf dem hinteren Rand (21b) des unbeweglichen Teils (21) des Dachs (20) mittels einer Gelenksachse (25) transversal zur Längsachse des Fahrzeugs befestigt ist.

9. Kraftfahrzeug nach Anspruch 8, **dadurch gekennzeichnet, dass** die Gelenksachse (25) deutlich oberhalb der Lehne des Vordersitzes (3) angeordnet ist.

10. Kraftfahrzeug nach einem der vorhergehenden Ansprüche, **dadurch gekennzeichnet, dass** die zentrale bewegliche Platte (23) in der zweiten Konfiguration des Fahrzeugs mit offener Ladefläche hinter der Lehne des Vordersitzes (3) angeordnet ist und sich zwischen dem unbeweglichen Teil (21) des Dachs (20) und dem Boden (6) erstreckt, wobei die hintere bewegliche Platte (24) gegen die Innenfläche der zentralen Platte (23) geklappt ist.

11. Kraftfahrzeug nach einem der vorhergehenden Ansprüche, **dadurch gekennzeichnet, dass** die zentrale bewegliche Platte (23) in einer Längsrichtung des Fahrzeugs und von vome nach hinten einen ersten Teil, der durch eine Scheibe (26) gebildet wird, und einen zweiten opaken Teil (27) umfasst, wobei die Scheibe (26) in der zweiten Konfiguration des Fahrzeugs mit offener Ladefläche ein Heckfenster bildet.

12. Kraftfahrzeug nach einem der vorhergehenden Ansprüche, **dadurch gekennzeichnet, dass** es Mittel (35) zur dichten Abtrennung des vor der zentralen beweglichen Platte (23) befindlichen Teils der Fahrgastzelle (2) von dem hinter der Platte (23) befindlichen Teil der Fahrgastzelle in der zweiten Konfiguration des Fahrzeugs mit offener Ladefläche umfasst.

13. Kraftfahrzeug nach Anspruch 12, **dadurch gekennzeichnet, dass** die Abtrennmittel durch einen festen Rahmen (35) gebildet sind, der zwischen der zentralen beweglichen Platte (23), dem Boden (6) und der Innenfläche jeder Seitenwand (10) des Fahrzeugs angeordnet ist.

14. Kraftfahrzeug nach Anspruch 13, **dadurch gekennzeichnet, dass** der feste Rahmen (35) in der zweiten Konfiguration des Fahrzeugs mit offener Ladefläche einen Überrollbügel bildet.

15. Kraftfahrzeug nach Anspruch 12, **dadurch gekennzeichnet, dass** die Abtrennmittel durch elastische Elemente gebildet werden, die zwischen der zentralen beweglichen Platte (23) und der Innenfläche jeder Seitenwand (10) des Fahrzeugs angeordnet sind.

## Claims

1. Motor vehicle of the estate car type which can be converted into an upwardly open trailer-type vehicle, known as a pickup, and comprising a driving compartment (2) containing a driving station, at least one front seat (3), a row of back seats (4) comprising at least one seat portion (4a) and at least one back rest (4b) which can be moved between a position of use and a retracted position, and defined by a floor, (6) two side walls (10) each comprising a rear window (13) and a quarter light (15) which can be retracted, a roof panel (20) covering the entire compartment (2) and, at its rear, by a hatch (40) which pivots and comprises an upper part forming a rear window (41) which is capable of retracting slidably inside a lower part of said hatch (40), **characterised in that** the roof panel (20) comprises, in succession, in a longitudinal direction of the vehicle from the front towards the back, a fixed part (21) and a movable part (22) formed by a central panel (23) and a rear panel (24), said panels (23, 24) each being movable by swivelling in the compartment (2) between a substantially horizontal position which extends said fixed part (21) in the estate car configuration of the vehicle and a position which is retracted respectively into two upwardly open trailer configurations of the vehicle.

2. Motor vehicle according to claim 1, **characterised in that** the movable rear panel (24) is hinged at its front edge (24a) to the rear edge (23b) of the central panel (23) by means of an articulation spindle (28) which runs transversely with respect to the longitudinal axis of the vehicle.

3. Motor vehicle according to claim 2, **characterised in that** the articulation spindle (28) is located substantially above the back rest (4b) of the row of rear seats (4) in the position of use.

4. Motor vehicle according to any one of claims 1 to 3, **characterised in that**, in the first open trailer configuration of the vehicle, the movable rear panel (24) is placed substantially as an extension of the back rest (4b) of the row of back seats (4) in the position of use, the movable central panel (23) being in the position extending the fixed part (21) of the roof panel (20).

5. Motor vehicle according to any one of claims 1 to 4, **characterised in that** the movable rear panel (24) comprises a frame fitted with a window pane (29) forming a rear window in the first open trailer configuration of the vehicle.

6. Motor vehicle according to any one of the preceding claims, **characterised in that** it comprises means (30) for closing off the lateral space between the movable rear panel (24) in the retracted position, the back rest (4b) of the row of back seats (4) and the adjacent portion of the inner surface of each side wall (10).

7. Motor vehicle according to claim 6, **characterised in that** the closing off means comprise, for each lateral space, a supplementary window (30) having a contour complementary in shape to said space and movable between a position retracted into the back rest (4b) of the row of back seats (4) and a deployed position closing off said lateral space.

8. Motor vehicle according to any one of the preceding claims, **characterised in that** the movable central panel (23) is hinged at its front edge (23a) to the back edge (21b) of the fixed part (21) of the roof panel (20) by means of an articulation spindle (25) which runs transversely with respect to the longitudinal axis of the vehicle.

9. Motor vehicle according to claim 8, **characterised in that** the articulation spindle (25) is located substantially above the back rest of said front seat (3).

10. Motor vehicle according to any one of the preceding claims, **characterised in that**, in the second open trailer configuration of the vehicle, the movable central panel (23) is placed behind the back rest of said front seat (3) and extends between the fixed part (21) of the roof panel (20) and the floor (6), the movable rear panel (24) being folded back against the inner surface of the central panel (23).

11. Motor vehicle according to any one of the preceding claims, **characterised in that** the movable central panel (23) comprises, in a longitudinal direction of the vehicle and from the front towards the back, a first part formed by a window (26) and an opaque second part (27) said window (26) forming a rear window in the second open trailer configuration of the vehicle.

12. Motor vehicle according to any one of the preceding claims, **characterised in that** it comprises means (35) for tightly separating the part of the passenger compartment (2) located in front of the movable central panel (23) from the part of the passenger compartment located behind said panel (23) in the second open trailer configuration of the vehicle.

13. Motor vehicle according to claim 12, **characterised in that** the separating means consist of a rigid frame (35) placed between the movable central panel (23), the floor (6) and the inner surface of each side wall (10) of the vehicle.

14. Motor vehicle according to claim 13, **characterised in that** the rigid frame (35) forms a safety hoop in the second open trailer configuration of the vehicle.

15. Motor vehicle according to claim 12, **characterised in that** the separating means are formed by flexible elements placed between the movable central panel (23) and the inner surface of each side wall (10) of the vehicle.
